# FASCICULE DE BREVET EUROPEEN

(11) **EP 1 952 069 B1**
(45) Date de publication et mention de la délivrance du brevet: **05.04.2017**
(21) Numéro de dépôt: 06831087.9
(22) Date de dépôt: 07.11.2006
(51) Int. Cl.: F24D 3/14

(54) **ECHANGEUR THERMIQUE POUR PAROI CHAUFFANTE/ REFROIDISSANTE**
WÄRMETAUSCHER FÜR HEIZ- / KÜHLDECKE
HEAT EXCHANGER FOR HEATING/COOLING WALL

(30) Priorité: 08.11.2005 FR 0511334
(43) Date de publication de la demande: 06.08.2008
(73) Titulaire: Innovert, 16000 Angoulême (FR)
(72) Inventeur: BOURON, Francis, F-16000 Angouleme (FR)
(74) Mandataire: de Saint-Palais, Arnaud Marie
(86) Numéro de dépôt international: PCT/FR2006/002485
(87) Numéro de publication internationale: WO 2007/054641

(56) Documents cités:
- EP-A- 0 841 004
- EP-A- 1 353 129
- WO-A-02/14747
- DE-A1- 3 215 902
- DE-A1- 3 243 768
- DE-A1- 4 319 072
- DE-U1- 20 304 344
- DE-U1- 29 813 171
- DE-U1- 29 819 935
- US-A- 4 109 859
- US-A- 5 042 569

## Description

La présente invention concerne un échangeur thermique pour paroi chauffante/refroidissante. Elle s'applique plus particulièrement à la réalisation de murs, de cloisons, et/ou de plafonds chauffants/refroidissants dans des bâtiments en construction ou existants.

De façon générale, les techniques pour chauffer et refroidir sont en pleine expansion.

Les applications concernant les plafonds sont particulièrement intéressantes car 100% ou presque de la surface est potentiellement émettrice et donc utilisable à des fins de chauffage/refroidissement à la différence du sol encombré d'isolants réduisant l'émission thermique tels que moquette, meubles, tapis, parquets flottants.

Différentes solutions ont été proposées.

Certaines solutions consistent en des cassettes de quelques dizaines de centimètres de côté comportant des serpentins dans lesquels circule un fluide caloporteur, généralement de l'eau, ces serpentins étant reliés à un collecteur.
Cependant, le collecteur de chaque cassette est proéminent et doit être dissimulé et il existe des joints apparents peu esthétiques entre les cassettes. De plus, ces cassettes sont préparées en usine et présentent de ce fait une faible capacité d'adaptation.

Elles sont pour ces différentes raisons utilisées quasi-exclusivement dans des bureaux dans des plafonds suspendus.

D'autres solutions proposent des produits où des tuyaux échangeurs sont recouverts ou noyés dans la masse (béton...). Ce type de produits présente généralement une épaisseur et un poids trop important pour une application plafond notamment en raison de ce que la paroi d'origine peut ne pas avoir une conception capable de supporter un tel poids supplémentaire.
En outre, il est nécessaire de faire intervenir en dehors d'un chauffagiste d'autres corps de métier tels qu'un maçon ou un plâtrier.

D'autres solutions recouvrent totalement la surface disponible avec un support grillagé mais la surface n'est pas totalement échangeuse ou pas de façon homogène. Il y a donc une perte d'échange thermique.
D'autres solutions proposent des éléments dispersés sur la surface disponible qui ne couvrent donc pas la totalité de ladite surface disponible et ne sont donc pas échangeur sur toute ladite surface disponible.
Dans ces différents cas, il n'y a pas d'échange thermique homogène sur toute la surface disponible.
Dans l'ensemble, ces solutions présentent des inconvénients car pour obtenir des performances thermiques suffisantes (puissance W/m²) :
- elles doivent utiliser un liquide caloporteur tel que l'eau plus chaud que dans une structure échangeant sur toute la surface pour obtenir une même température dans la pièce ; or, par exemple, il est plus coûteux de produire une eau à 60°C qu'une eau à 25°C,
- de même pour refroidir correctement, elles doivent utiliser un liquide caloporteur tel que de l'eau par exemple à moins de 19°C ce qui entraîne, outre le coût élevé de production d'une eau à cette température, des problèmes de condensation.

Enfin, la plupart de ces solutions sont mises en place sur les rails d'un plafond suspendu. Or, cela convient difficilement à une restauration, de surcroît, à une restauration souhaitant respecter la hauteur et/ou les éléments décoratifs d'un plafond.

Un echangeur thermique selon le préambule de la revendication est décrit dans WO02/14747 A1. L'invention a pour objet de résoudre ces inconvénients grâce à un échangeur permettant :
- d'obtenir une très faible inertie thermique,
- d'effectuer une pose à sec dans des bâtiments en construction ou existant,
- d'éviter l'apparition d'un point de rosée lorsque l'on refroidit,
- de baisser les coûts d'obtention de la température souhaitée notamment en utilisant un maximum de surface et surtout en réduisant les échanges thermiques entre le support et l'échangeur thermique et en optimisant les échanges thermiques entre l'invention et le volume à chauffer/refroidir,
- de poser des éléments décoratifs tels que tapisserie, fresque, corniche, rosace dans des bâtiments en construction ou en restauration,
- d'obtenir une isolation acoustique efficace.

A cet effet, elle propose un échangeur thermique pour parois chauffantes destinées à équiper des murs, des cloisons et/ou des plafonds, cet échangeur thermique comprenant au moins une première plaque autoportante de type tôle ondulée ou analogue en un matériau thermiquement conducteur, cette plaque servant à assurer un échange thermique avec l'air environnant, et comportant une série d'ondulations parallèles d'un premier type qui s'étend sur au moins une fraction de la longueur de la plaque, ces ondulations délimitant chacune un volume de passage débouchant à l'extérieur par une ouverture de largeur minimum inférieure à la largeur maximum du volume, au moins un conduit souple en matière plastique de section sensiblement égale à celle dudit volume de passage, ce conduit étant destiné à être connecté à un circuit de fluide caloporteur et s'étendant à l'intérieur dudit volume de passage, et des moyens de fixation de ladite plaque sur un support du côté de la face de la plaque opposée aux susdites ouvertures, par l'intermédiaire de moyens d'espacements conçus de manière à ce qu'après fixation de la plaque sur le support, les susdites ondulations s'étendent à une distance prédéterminée dudit support, la forme et les dimensions du conduit et du volume de passage étant telles que le conduit vienne en contact au moins partiellement sur toute la longueur de la surface intérieure de l'ondulation.

Au moins un panneau de parement pourra être fixé sur l'échangeur par exemple en le collant ou le vissant notamment avec des vis auto-foreuses. Ledit panneau de parement pourra être par exemple en plâtre et/ou en bois et/ou en PVC et/ou carrelage et/ou faïence.

Selon un premier mode d'exécution de l'invention, l'échangeur thermique fait intervenir des plaques d'un premier type dans lesquelles les ondulations s'étendent d'un premier bord transversal à l'autre desdites plaques, et de plaques d'un second type appelées module de terminaison destinées à être disposées en regard des bords transversaux des plaques du premier type. Les plaques du second type comportent des ondulations coudées débouchant sur leurs bords situés en regard des bords transversaux des plaques du premier type de manière à relier par paires les ondulations successives des plaques du premier type afin d'obtenir un volume de passage latéralement sinueux par lequel passe le susdit circuit. Les ondulations coudées sont alors dimensionnées de manière à permettre au conduit de se dilater ou de se rétracter en fonction de la température du fluide caloporteur circulant dans le conduit, sans exercer de contraintes mécaniques susceptibles de fragiliser l'échangeur et/ou le conduit et/ou des nuisances sonores engendrées par ces contraintes. A cet effet, la section des ondulations coudées pourra être beaucoup plus importante que celle du conduit.

Selon un deuxième mode d'exécution de l'invention, l'échangeur pourra faire intervenir au moins deux plaques d'un troisième type comprenant chacune une série d'ondulations longitudinales parallèles débouchant au moins sur un bord transversal de la plaque et reliées par paires au voisinage de l'autre bord par des tronçons coudés, chaque paire définissant avec ledit tronçon un trajet sensiblement en forme de U à ailes allongées apte à recevoir le conduit. Les deux plaques pourront être disposées bord à bord au niveau des bords latéraux dans lesquels débouchent les ondulations de manière à obtenir un trajet sinueux dans lequel passe le susdit conduit.

Bien entendu, les ondulations rectilignes de l'une des deux plaques devront être décalées par rapport aux ondulations de l'autre plaque, d'un intervalle entre deux ondulations successives.

Ici également, les tronçons d'ondulations coudées seront dimensionnés de manière à absorber les dilatations et rétractations du conduit.

En alternative, il sera possible d'intercaler entre les deux plaques utilisées dans ce deuxième mode d'exécution, une ou plusieurs plaques du premier type comportant des ondulations parallèles qui s'étendent d'un bord à l'autre plaque.

Les modules de terminaison, de même que les plaques du troisième type, pourront comporter des moyens de fixation sur le support.

Avantageusement, des moyens de fixation pourront comprendre des cuvettes réalisées dans le fond des ondulations, et des vis de fixation destinées à passer dans le fond desdites cuvettes pour venir se fixer dans le support. Ces cuvettes servent alors d'espaceurs permettant de maintenir le fond des ondulations à distance du support. La profondeur de ces cuvettes sera alors supérieure à la hauteur des têtes des vis de manière à éviter les ponts thermiques directs entre le conduit et la vis. En alternative, les cuvettes pourront être remplacées par une gorge s'étendant sur toute la longueur des ondulations.

Les susdites plaques pourront être constituées par des tôles en un matériau tel que l'acier, l'aluminium, l'inox et leur épaisseur pourra être préférentiellement inférieure à 1 mm de façon à obtenir une plaque avec une masse pouvant être supportée par ledit support.

Le support sur lequel est fixé l'échangeur pourra être directement une paroi existante ou encore un rail maintenu par des suspentes à l'intérieur d'un plafond suspendu ou tout autre dispositif similaire.

Le susdit conduit est réalisé en un matériau déformable élastiquement afin de permettre ou de faciliter sa connexion dans les ondulations par encliquetage, ainsi tout moyen de maintien supplémentaire est superflu.
Les ondulations et le conduit pourront avoir une section de forme sensiblement complémentaire par exemple au moins partiellement cylindrique.
La distance entre deux ondulations parallèles du premier type pourra être de préférence de dix centimètres ou plus si la puissance à obtenir est moindre. Le susdit conduit pourra comporter un diamètre légèrement supérieur à celui des ondulations du premier type de plaque pour avoir un contact avec pression.

De plus, dès la mise en service de l'échangeur, la pression du liquide caloporteur à l'intérieur dudit au moins un conduit augmentera encore le contact entre la surface intérieure des ondulations du premier type de plaque et ledit conduit.

La surface intérieure de l'ondulation du premier type de plaque en contact avec ledit conduit pourra représenter trois quarts de la surface extérieure du conduit.
Selon une première variante, ledit conduit, une fois engagé dans les ondulations (par exemple par encliquetage), pourra être en contact direct ou presque avec ledit panneau de parement.

Selon une deuxième variante, ledit conduit, une fois connecté aux ondulations, pourra être en contact indirect avec ledit panneau de parement au moyen d'une pâte thermoconductrice pour favoriser et homogénéiser les échanges thermiques avec le panneau et par conséquent avec le volume à chauffer/refroidir.
Il est à noter que ladite pâte thermoconductrice pourra recouvrir toute la face de la plaque en contact avec ledit panneau de parement.
Cette pâte thermoconductrice pourra par exemple être la colle utilisée pour la fixation du panneau de parement sur la plaque.

Dans tous les cas, il est important pour avoir un échange thermique optimal de réduire au maximum l'espace vide et de faciliter la continuité thermique par contact entre l'échangeur selon l'invention et le panneau. En effet, un espace vide ou un manque de conduction constituent un manque de puissance W/m².

Avantageusement, les moyens d'espacement seront conçus de manière à présenter une surface minimum de contact avec le support.

Lesdits moyens d'espacement pourront consister en des bossages estampés ou rapportés.

Lesdits moyens d'espacement pourront être en forme de cône ce qui permettra un montage aisé tout en offrant une surface de contact minimale avec le support.

Lesdits moyens de fixation de la plaque sur le support pourront en outre comprendre des moyens mécaniques par exemple des vis traversant les moyens d'espacement.

Selon une variante, lesdits moyens mécaniques pourront également traverser une entretoise isolante, l'espace défini entre le support et la plaque et dont la hauteur correspond à celle de ces entretoises étant occupé par un matériau isolant.

Les différents types de plaques pourront comprendre des raidisseurs formant des bossages estampés ou rapportés.

Ces raidisseurs pourront être situés entre les ondulations des plaques du premier type afin d'assurer :
- une parfaite planéité de l'échangeur entre chaque ondulation du premier type et ainsi une planéité de l'ensemble de l'échangeur permettant de fixer un panneau de parement rigide ou semi-rigide,
- une bonne tenue d'un échangeur de grandes dimensions qui ne fléchira pas excessivement lors de la manutention pour sa mise en place sur le support notamment pour une application plafond.

Les plaques du premier type pourront avoir des dimensions prévues de façon à ne nécessiter que quelques unités juxtaposées pour faire toute la paroi souhaitée.

Par ailleurs, un seul conduit pourra être utilisé à travers les plaques recouvrant le support.

Des trous de forme quelconque géométrique ou non, réalisés par découpes totales ou partielles pourront être prévus dans les plaques des différents types pour assurer des points d'ancrage lors de la fixation d'au moins un panneau de parement par collage. En effet, la colle pénètre à travers ces trous et s'étale de l'autre côté des plaques puis en séchant agit à la manière de crochets d'ancrage.

Les faces des plaques destinée à être du côté du volume à chauffer/refroidir sont planes, les différents éléments compris dans lesdites plaques tels que des ondulations, des moyens d'espacement, des raidisseurs faisant saillie du côté du support.

L'invention présente de nombreux avantages :
Elle peut être très facilement mise en oeuvre dans des bâtiments en cours de construction mais également dans des bâtiments existants où les techniques actuelles ne sont pas en mesure de s'adapter notamment dès qu'il y a des éléments de décor à respecter ou lorsque les supports à équiper ne sont pas aptes à supporter une masse supplémentaire excessive.

Les dimensions de la pièce ou du volume comportant l'invention restent quasi-inchangées. En effet, l'échangeur selon l'invention présente une épaisseur maximum de l'ordre de quelques centimètres et de préférence moins de trois centimètres et encore plus préférentiellement moins de deux centimètres.

L'échangeur devient la surface plane du mur ou du plafond et peut recevoir tout matériau de finition par vissage ou collage.

La pose de l'échangeur est une pose à sec. Il n'y a donc pas besoin de faire intervenir d'autres professionnels par exemple pour couler du ciment ou un équivalent ce qui, de surcroît, demande un temps de séchage.
De plus, l'entretien est beaucoup plus aisé. En effet, la découverte d'une fuite n'implique pas de tout casser et de tout refaire : il suffit de découper par exemple au moyen d'un cutter une bande dans le panneau par exemple de plâtre, de bois ou de PVC, de réparer le conduit avant de refixer une bande de matériau de finition tel que du plâtre, du bois ou du PVC.

Pendant les travaux, la mise en place de l'invention ne nécessite pas de tout déménager : on peut se contenter de déplacer les meubles dans la pièce au fur et à mesure de l'installation.
Après les travaux, il n'y pas de traces visuelles de l'installation.

L'ensemble échangeur/panneau de parement (matériau de finition) présente du fait des matériaux choisis et de leur épaisseur une masse qui pourra être supportée par toutes les parois déjà existantes et non conçues dans cet objectif.

L'échangeur, du fait de sa structure présentant une faible surface de contact avec le support, constitue non seulement une barrière thermique par rapport au support mais également une barrière acoustique.
De plus, la nature des matériaux choisis peut permettre de former un écran aux ondes magnétiques (antenne hertzienne fixée sur le toit d'un immeuble...).

La possibilité d'échanger sur la totalité de la surface avec très peu d'inertie thermique et pas seulement au niveau des conduits permet d'obtenir une grande performance thermique c'est-à-dire une puissance W/m² très élevée tout en consommant moins d'énergie, la température du fluide caloporteur utilisé étant moins froide en été et moins chaude en hiver que dans les solutions existantes.

De plus, l'uniformité de la température sur toute la surface procure une grande sensation de confort.

Une fois l'installation de l'échangeur et des panneaux de parement terminée, il n'y a pas de joint apparent ou de différence de niveau. La paroi ainsi créée peut être par exemple peinte ou tapissée.

L'échangeur est apte à recevoir des perçages par exemple de réservation pour des gaines électriques, hydrauliques ou pour suspendre un plafonnier...

L'échangeur est apte à être découpé sur site au moyen d'outils classiques pour s'adapter aux dimensions et/ou aux éléments des parois.

Ainsi, à partir d'une fabrication industrielle, il est possible de faire du surmesure.

Des modes d'exécution de l'invention seront décrits ci-après, à titre d'exemples non limitatifs, avec référence aux dessins annexés dans lesquels :
Les figures 1 a et 1 b sont respectivement une vue de dessous et une vue en coupe partielle d'un échangeur selon l'invention pouvant se fixer sur un plafond ;
La figure 2 est une vue en coupe transversale de l'échangeur de la figure 1 comportant un conduit et fixé directement sur un plafond existant isolé thermiquement ;
La figure 3 est une vue en coupe transversale de l'échangeur de la figure 1 fixé directement sur un plafond existant non isolé thermiquement et phoniquement ;
La figure 4 est une vue en coupe transversale de l'échangeur de la figure 1 intégré dans un plafond suspendu ;
Les figures 5a et 5b sont des représentations de mode de fixation d'un panneau de parement sur un échangeur selon l'invention ;
La figure 6 est une vue de dessous d'une partie d'un échangeur selon l'invention comprenant un module de terminaison ;
La figure 7 est une vue en coupe transversale de la figure 6 selon la ligne AA ;
La figure 8 est une vue de dessous d'un ensemble d'échangeurs selon l'invention comprenant des modules de terminaison couvrant un plafond entier d'un volume à chauffer/refroidir ;
La figure 9 est une vue de dessous d'une partie d'un échangeur selon l'invention comprenant un module de terminaison montrant une possibilité de découpe sur site.
La figure 10 est une vue de dessus d'une plaque selon une autre variante d'exécution selon l'invention
La figure 11 est une coupe transversale prise au niveau des détails D de la figure 10
La figure 12 est une coupe longitudinale des détails D de la figure 10
La figure 13 est une vue de dessus montrant l'assemblage de deux plaques du type de celle représenté figure 10.

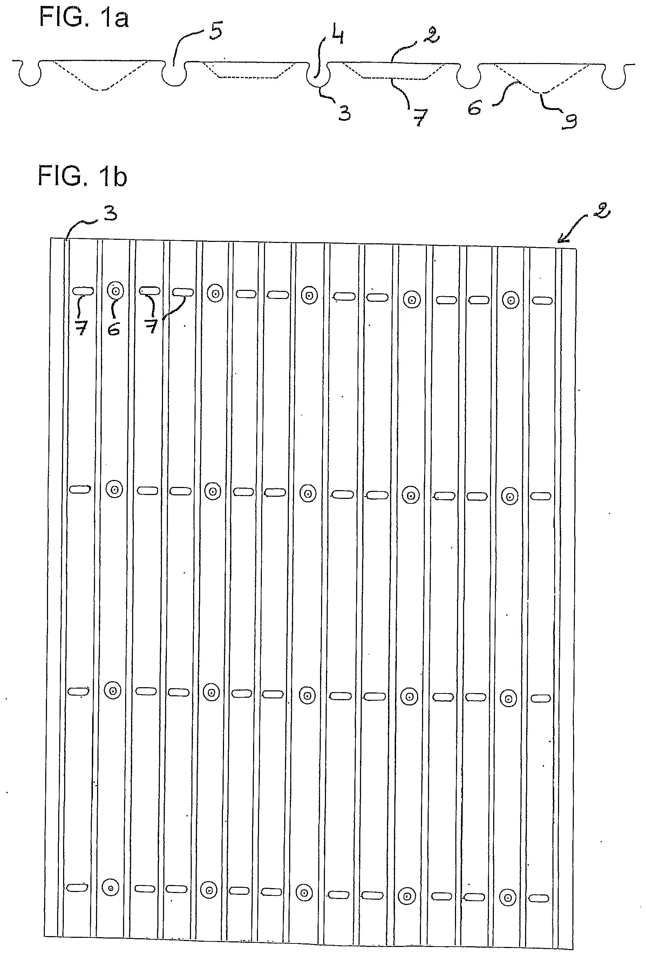

Les figures 1a et 1b sont respectivement une vue de dessous et une vue en coupe partielle d'un échangeur selon l'invention pouvant se fixer sur un plafond.

Cet échangeur comprend une plaque 2 en acier d'une épaisseur de 5/10 de mm se fixant sur un support comportant :
- une série d'ondulations parallèles 3 de section transversale cylindrique formées en saillie dans la face de la plaque 2 du côté du support, s'étendant d'un bord à l'autre de la plaque et délimitant chacune un volume de passage cylindrique 4 débouchant à l'extérieur, du côté du volume à chauffer/refroidir, par une ouverture 5 de largeur minimum inférieure au diamètre du volume de passage 4,
- des moyens de fixation de l'échangeur sur le support comportant des moyens d'espacement constitués par des enfoncements de la plaque 2 en forme de cône 6 du côté du support et présentant une hauteur légèrement supérieure à celle des ondulations 3 afin d'écarter lesdites ondulations du support,
- des raidisseurs 7 pour assurer la planéité de l'échangeur avec une conformation, ce sont des enfoncements de forme oblongue orientés du même côté que les ondulations 3 et les cônes d'écartement 6.

Les ondulations 3 peuvent avoir un diamètre compris par exemple entre 12 et 20 mm

Un conduit est connecté aux ondulations 3. Il s'agit par exemple d'un tuyau 8 en polyéthylène réticulé (PER) et polybutylène (PB) pouvant avoir un diamètre compris entre 12 et 20 mm, c'est-à-dire sensiblement égal au diamètre des ondulations 3.

Le diamètre le plus petit des cônes d'écartement 6 est en contact avec le support et peut être égal à 15 mm. Ce diamètre pourra comporter un trou 9 pour le passage d'une vis.
Le diamètre le plus important est situé dans le plan de la plaque 2 du côté du volume à chauffer/refroidir et peut être compris par exemple entre 15 et 80 mm.

Les cônes d'écartement 6 présentent une hauteur supérieure de 2 mm par rapport à la hauteur maximale des ondulations 3 afin de laisser 2 mm d'espace vide entre les ondulations et le support.

Les cônes d'écartement 6 et les raidisseurs 7 sont situés sur des lignes parallèles qui sont perpendiculaires aux axes principaux des ondulations 3 Ces lignes comprennent une succession de la configuration suivante : un cône d'écartement entre deux ondulations puis deux raidisseurs chacun entre deux ondulations etc.

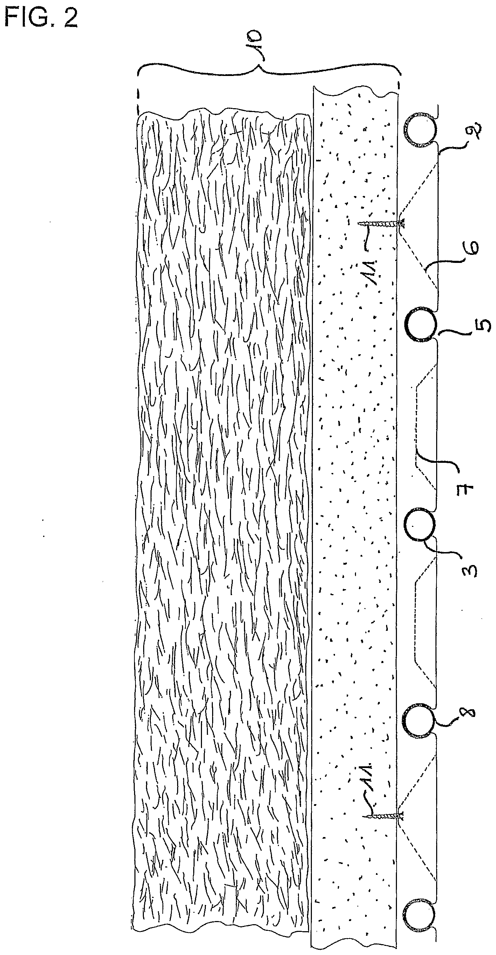

Une coupe longitudinale d'une telle ligne illustrée sur la figure 2 montre une succession de motifs cône/ ondulation/ raidisseur/ ondulation/ raidisseur/ ondulation.

Le support 10 est constitué par la paroi d'origine qui est isolée.

La plaque 2 est fixée dans le support 10 au moyen de vis 11 traversant les cônes de fixation 6 au niveau du trou 9.

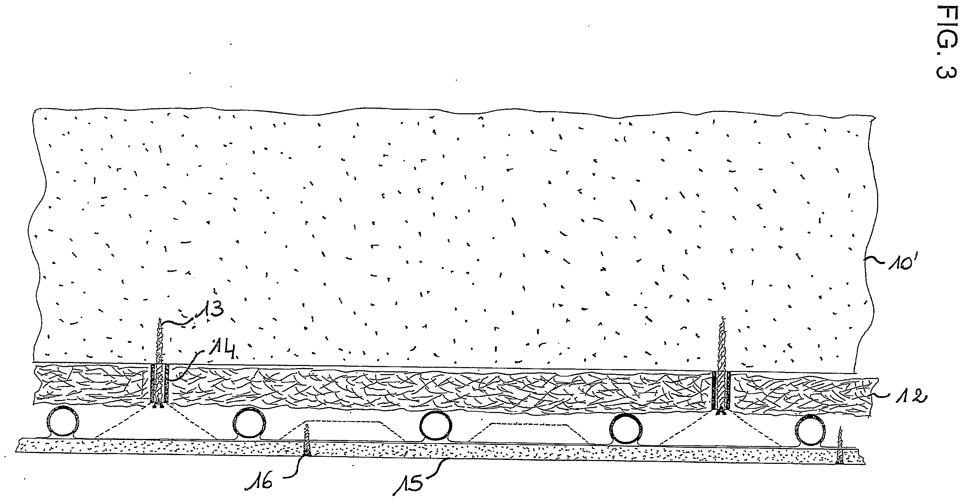

Dans la figure 3, un matériau isolant 12 est intercalé entre un support 10' non isolé thermiquement et phoniquement et la plaque 2.

La plaque 2 est fixée au support 10 par des vis 13 traversant les cônes de fixation 6 puis des entretoises isolantes 14, ces entretoises traversant le matériau isolant 12.

Ledit matériau isolant 12 pourra présenter une épaisseur variable. En effet, il sera adapté au coefficient de performance recherché.

Une plaque de plâtre 15 de grandes dimensions par exemple 1,20 m x 2,50 m avec une épaisseur de 6 à 10 mm est fixée au moyen de vis 16 pour former la paroi finale du volume à chauffer/refroidir.

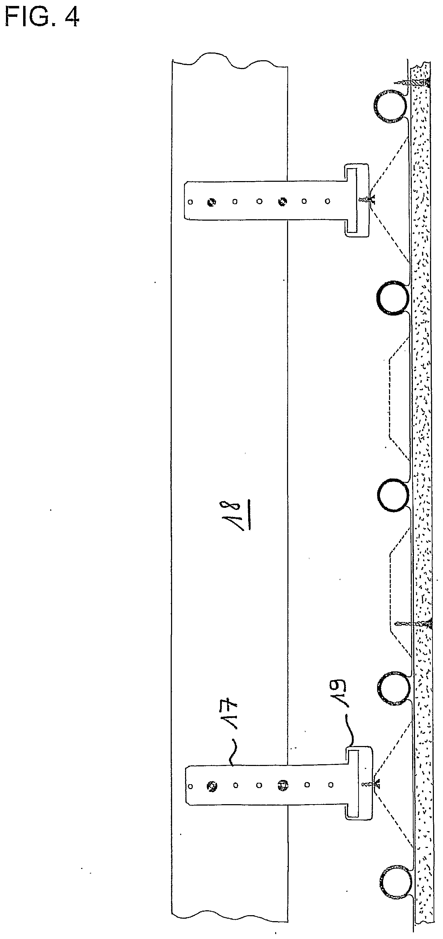

L'exemple de la figure 4 illustre l'intégration d'un échangeur selon l'invention dans un plafond suspendu.

Dans un plafond suspendu, des suspentes 17 sont fixées par leurs extrémités supérieures sur des poutres ou solives 18 de telle manière que les têtes des suspentes affectées à un même rail profilé 19 se trouvent alignées.
Dans cet exemple, la plaque 2 de l'échangeur est fixée sur les rails profilés 19 à l'aide des cônes d'écartement 6.

Selon une variante, un matériau isolant pourra être posé entre les poutres ou solives 18 et les rails 19.

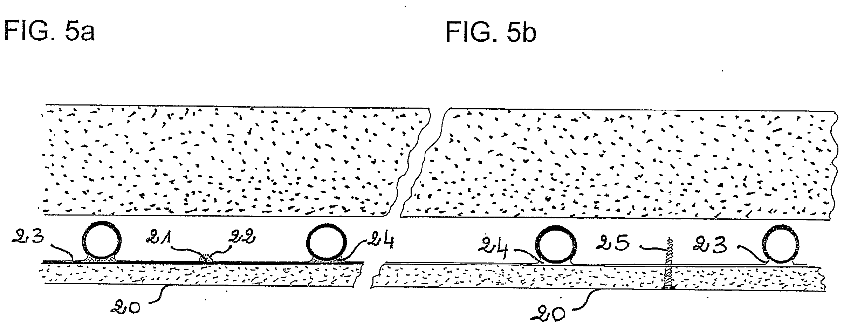

Les figures 5a et 5b illustrent deux modes de fixation d'un panneau de parement 20 sur un échangeur selon l'invention comportant des trous 21 par découpes partielles 22 formant écorchés.

Le premier mode de fixation (Figure 5a) est réalisé par collage du panneau de parement 20 sur une plaque 23. Cette colle a également pour fonction de remplir l'espace éventuel 24 entre le conduit et le panneau de parement. Avantageusement, la colle après avoir pénétré à travers les trous 21 des écorchés 22, s'étale sur l'autre face de la plaque 23 puis en séchant, elle agit à la façon d'un ancrage renforçant ainsi la fixation du panneau 20 sur la plaque 23.
Il est à noter que la technique est particulièrement adaptée pour coller du carrelage ou de la faïence sur un échangeur posé sur un mur.

Un deuxième mode de fixation (Figure 5b) est réalisé par vissage au moyen de vis à tête auto-foreuse 25.

Une pâte thermoconductrice pourra être ajoutée entre la plaque 23 et le panneau de parement 20 pour améliorer l'échange thermique.

Un troisième mode de fixation pourra consister en un collage et un vissage.

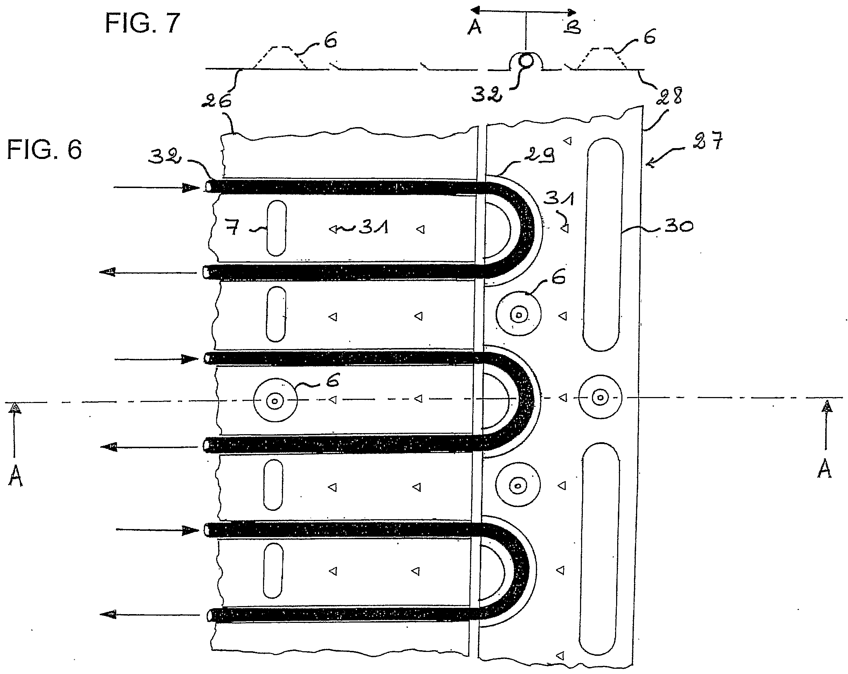

La figure 6 illustre une vue de dessous d'une partie d'un échangeur comportant une variante 26 de la plaque 2 telle qu'illustrée sur la figure 1 et un module de terminaison 27.

Ce module de terminaison comprend une plaque 28 de forme rectangulaire présentant les mêmes caractéristiques que la plaque 2, à savoir en acier d'une épaisseur de 5/10 mm se fixant également sur le même support, cette plaque comportant :
- des ondulations en forme de coude 29 de section transversale en forme de U inversé formées dans la face de la plaque du côté du support dont les extrémités débouchent sur un même côté longitudinal,
- des moyens de fixation du module sur le support comportant des cônes d'écartement 6, les cônes étant conformés pour présenter une hauteur légèrement supérieure à celle des coudes 29,
- des raidisseurs 30 de forme oblongue formés par enfoncement et axés parallèlement à l'autre côté longitudinal de la plaque 28,
- des découpes partielles 31 s'ouvrant sur la face de la plaque 28 du côté du support et en forme de triangle réparties selon l'axe longitudinal de la plaque 28 pour renforcer la fixation d'un panneau de parement par collage.

Il est à noter que des découpes 31 telles que décrites se situent également entre les ondulations de la plaque 26.

La section des coudes 29 présente des dimensions supérieures à celles d'un tuyau 32 permettant au tuyau de s'allonger et de se rétracter sans exercer de contraintes mécaniques. En effet, en s'allongeant il se déplacera dans le sens de la flèche A et en se rétractant, il se déplacera selon la flèche B (Figure 7).

Les cônes d'écartement 6 se situent entre les coudes 29 et entre les raidisseurs 30 de façon à former une ligne de chaque côté longitudinal du module 27.

Il est à noter que les plaques 26 et 28 sont dans un même plan.

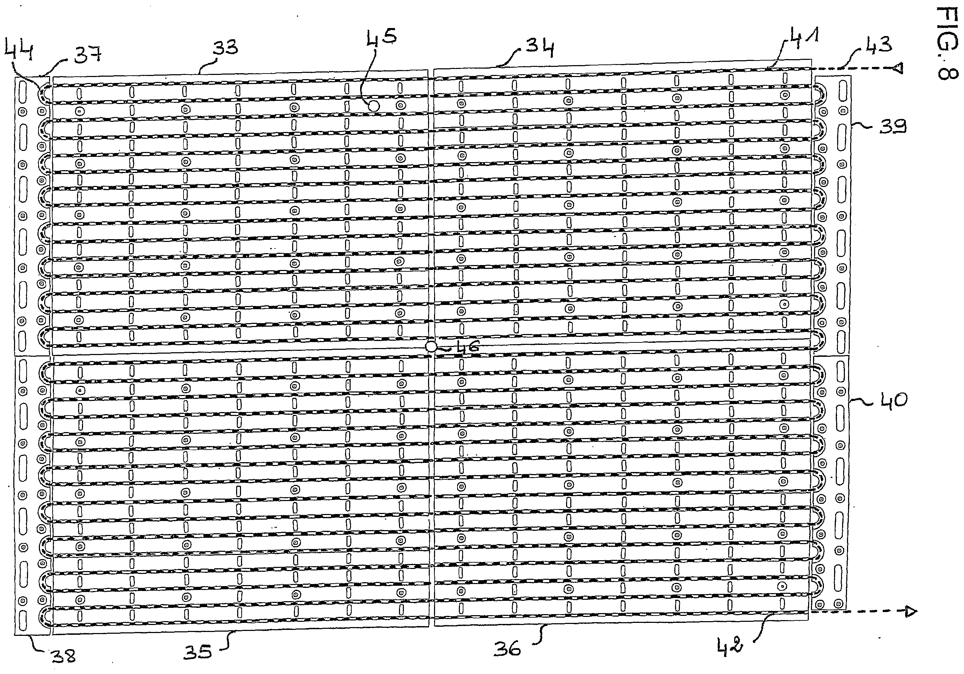

La figure 8 illustre un ensemble d'échangeurs comprenant des modules de terminaison tels qu'ils sont montés pour fonctionner.

Plus précisément, cet ensemble est composé de quatre plaques 33 à 36 juxtaposées deux à deux sur deux lignes de façon à ce que les ondulations 3 de deux plaques juxtaposées coïncident pour former des ondulations de plus grande longueur.
Ces plaques sont des plaques de 1,60 m par 2,10 m.
Deux ondulations successives sont séparées par 10 cm ou plus selon la puissance souhaitée.
Le long des côtés libres de chacune des plaques est positionné un module de terminaison 37 à 40.

Ces plaques comprennent des raidisseurs 7 et des cônes d'écartement 6 selon une alternance de deux types de lignes perpendiculaires aux ondulations.
Le premier type de lignes comprend un raidisseur 7 entre chaque ondulation 3.
Le deuxième type de lignes comprend un cône d'écartement 6 entre deux ondulations 3 puis deux raidisseurs 7 chacun entre deux ondulations etc.

Un module de terminaison 37 est positionné le long du côté gauche de la plaque 33 de façon à ce que les ondulations de ladite plaque soient chacune en face de l'extrémité d'un coude 29.

Un module de terminaison 38 est positionné le long du côté gauche de la plaque 35 de façon à ce que les ondulations de ladite plaque soient chacune en face de l'extrémité d'un coude. Ce module 38 est juxtaposé au module 37.

Un module de terminaison 39 est positionné le long du côté droit de la plaque 34 de façon à ce que les ondulations de ladite plaque soient chacune en face de l'extrémité d'un coude.
Le module 39 est décalé par rapport au bord droit de la plaque 34 de façon à ce que la sortie de la première ondulation 41 soit libre.

Un module de terminaison 40 est positionné le long du côté droit de la plaque 36 de façon à ce que les ondulations de ladite plaque soient chacune en face de l'extrémité d'un coude.
Ce module est juxtaposé au module 39 et il présente une longueur de façon à ce que la dernière ondulation 42 soit libre.

Un tuyau 43 est alors connecté à ces plaques et ces modules de terminaison :
Une des extrémités dudit tuyau 43 est placée au niveau du bord droit de la plaque 34 située en haut à droite sur la figure puis il est encliqueté dans la première ondulation 41 restée libre.

Il débouche ensuite au niveau du bord gauche de la plaque 33 située en haut à gauche avant de former un coude 44 s'encliquetant dans un coude 29 dans le module de terminaison 37 et d'être encliqueté dans l'ondulation suivante. Ce montage est poursuivi jusqu'à ce que le tuyau 43 débouche au niveau du bord droit de la plaque 36 située en bas à droite au niveau de l'ondulation 42 restée libre.

Les deux extrémités de ce tuyau 43 sont ensuite connectées à un collecteur lui-même connecté à un générateur de chaud et de froid, ce circuit comprenant un liquide caloporteur tel que l'eau.

Des trous 45, 46 peuvent être réalisés lors de la pose afin de permettre le passage de gaines électriques par exemple.

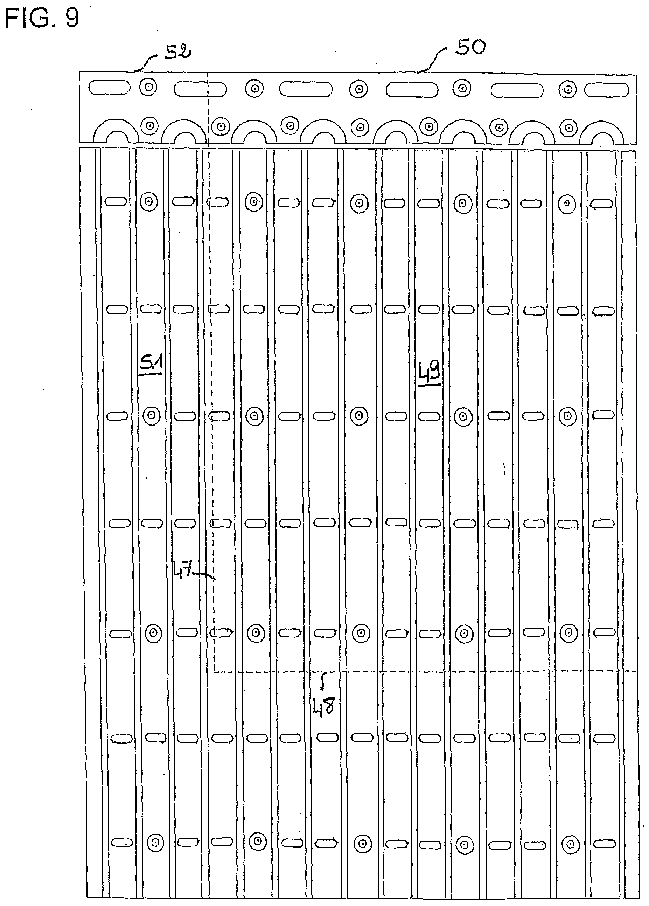

Il est à noter que ces plaques et ces modules peuvent être découpés sur place au moment de la pose afin de s'ajuster au mieux à la paroi, par exemple selon les pointillés verticaux 47 et horizontaux 48 (Figure 9).
Cette découpe aboutit à la constitution de plusieurs éléments :
- une plaque rectangulaire 49,
- un module 50 adapté à la plaque 49,
- une plaque en forme de L 51,
- un module 52 adapté à la plaque 51.

La découpe selon les pointillés 47 et 48 peut correspondre à au moins deux cas :
Dans le premier cas, les éléments mis en place sont la plaque 49 et le module 50.

Dans le deuxième cas, les éléments mis en place sont la plaque 51 et les modules 50 et 52, le module 50 étant apte à être placé au bout de la plaque 51 au niveau du côté défini par les pointillés 48.
Ce type de configuration est utilisé pour des parois situées au niveau d'ouvertures telles que des vasistas, des portes, des fenêtres.

Cette modularité est impossible avec les solution de l'art antérieur notamment celles proposant des cassettes avec collecteur.

Enfin des panneaux de parements par exemple en placoplâtre sont fixés sur l'échangeur. Une fois jointés par un enduit adéquat, ces panneaux de parement peuvent être peints ou tapissés.

L'invention ne se limite pas aux exemples précédemment décrits.

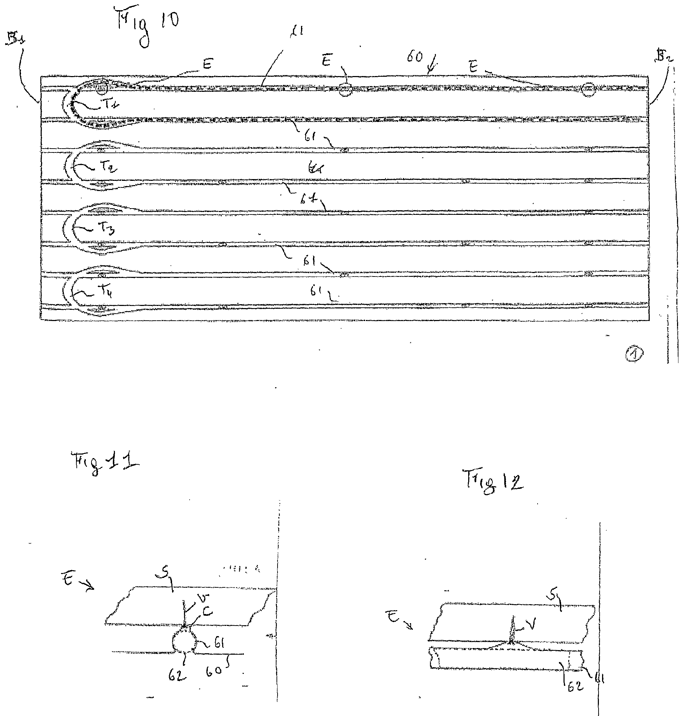

Ainsi, selon un autre mode d'exécution particulièrement avantageux de l'invention qui est illustré sur les figures 10 à 13, l'échangeur pourra faire intervenir au moins deux plaques 60 du type de celle représentée sur la figure 10 qui comprend :
une série d'ondulations longitudinales rectilignes 61 qui s'étendent parallèlement les unes aux autres d'un bord transversal B1 à l'autre B2 et,
une série de tronçons d'ondulations coudés T1 à T4 situés au voisinage de l'un des bords transversaux B1 qui relient chacun par une paire d'ondulations longitudinales successives 61 de manière à obtenir une succession de trajets en forme de U à ailes (très) allongées.

La section des tronçons T1 à T4 est plus grande que celle des ondulations longitudinales 61 et du conduit de fluide caloporteur de manière à résoudre les problèmes de dilatation précédemment évoqués.

Dans cet exemple les tronçons T1 à T4 présentent chacun une forme sensiblement elliptique tronquée dont le grand axe est parallèle aux ondulations 61. Le petit axe de cette forme elliptique est plus grand que la distance entre deux ondulations successives 61. Les extrémités de cette forme tronquée débouchent tangentiellement dans les deux ondulations longitudinales 61 tandis que du côté opposé, la forme elliptique intersecte lesdites ondulations 61.

Grâce à ces dispositions, il est possible de respecter la norme relative au rayon de cintrage qui impose que plus le diamètre du conduit est important, plus le rayon de cintrage doit être important. En effet, le petit axe de l'ellipse peut être augmenté jusqu'à ce que l'ellipse vienne tangenter l'ellipse adjacente

Les moyens de fixation de la plaque 61 sur le support S font ici intervenir des cuvettes C obtenues par emboutissage dans le fond des ondulations 61 ainsi que des vis de fixation V destinées à passer au travers du fond des cuvettes C, par exemple par des perçages préformés, pour venir se fixer dans le support S (figures 11 et 12)

La profondeur des cuvettes C est prévue très supérieure à la hauteur des têtes de vis V de manière à éviter les ponts de conduction thermique directs entre le conduit 62 passant dans les ondulations 61 et lesdites têtes. On notera que ce problème n'existe pas en ce qui concerne les cuvettes C réalisées dans les portions d'ondulations situées au niveau du petit axe de chacun des tronçons coudés T1 à T4.

L'usage de ce mode de fixation permet de réduire le nombre de points de fixation tout en préservant la rigidité et la planéité de l'ensemble et les propriétés d'isolation thermique du côté du support.

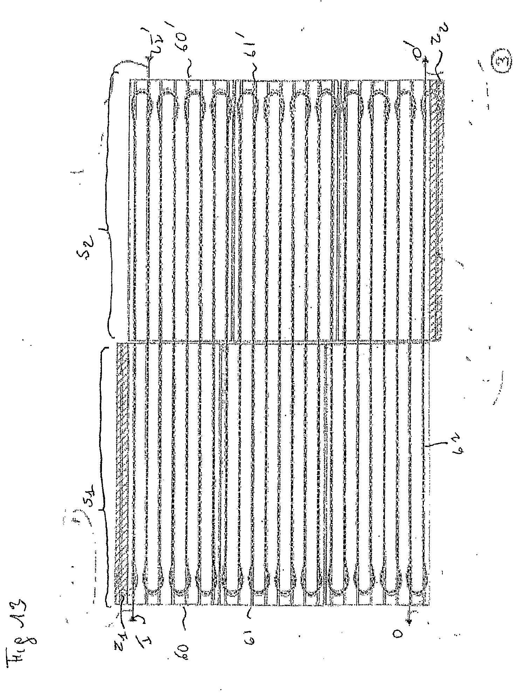

La figure 13 illustre le principe de l'assemblage de plaques 60, 60' du type de celle représentée figure 10.

Dans cet exemple, deux séries de plaques S1, S2 sont mises bout à bout au niveau de leurs faces transversales situées à l'opposé des tronçons coudés. Les plaques de chacune des séries sont disposées côte à côte, au niveau de leurs bords longitudinaux.

Les plaques 60, de l'une des séries S1 sont décalées par rapport aux plaques 60' de l'autre série dans le sens transversal, d'une distance égale à la distance séparant deux ondulations consécutives 60 de manière à ce que les ondulations 61 des plaques 60 de l'une des séries S1 se trouvent alignées sur les ondulations 61' des plaques 60' de l'autre série S2, avec un décalage d'une ondulation. De ce fait, on obtient un trajet sinueux unique passant par toutes les ondulations, excepté la première ondulation de l'une des séries S1 ainsi que la dernière ondulation de l'autre série S2. C'est dans ce trajet que l'on dispose le conduit de fluide caloporteur.

Les zones Z1, Z2 des deux séries de plaques qui dépassent à chacune des extrémités de l'échangeur et qui contiennent les ondulations non utilisées peuvent être supprimées.

Un avantage important de la solution précédemment décrite consiste en ce qu'elle permet de prévoir l'arrivée I, I' et la sortie O, O' du conduit du côté souhaité, par exemple à gauche ou à droite de l'échangeur formé par les deux plaques.

Bien entendu, il est possible d'intercaler entre les deux séries de plaques S1 et S2 des plaques intercalaires.

Une particularité des échangeurs précédemment décrits consiste en ce qu'ils sont rigides dans le sens des ondulations et qu'ils peuvent êtres cintrés autour d'axes parallèles audites ondulations (les ondulations jouant le rôle de charnières élastiques). Ainsi, ces échangeurs sont autoportants tout en pouvant épouser les formes de murs ou de cloisons présentant des profils courbes ou polygonaux voire même gauches.

Un autre avantage important de l'invention consiste en ce que l'échangeur peut être utilisé en tant qu'écran phonique et/ou anti-radiations

## Revendications

1. Echangeur thermique pour paroi chauffante/refroidissante, destiné à équiper des murs, des cloisons et/ou des plafonds,
comprend :
- au moins un conduit souple (8, 32, 43) en matière plastique déformable élastiquement, destiné à être connecté à un circuit de fluide caloporteur ; et,
- au moins une première plaque (2, 23, 26, 33-36) servant à assurer un échange thermique avec l'air environnant, et comportant une série d'ondulations parallèles (3) d'un premier type qui s'étend sur au moins une fraction de la longueur de la plaque (2, 23, 26, 33-36), ces ondulations (3) délimitant chacune un volume de passage (4) à l'intérieur duquel s'étend le conduit ;
ledit conduit étant de section sensiblement égale à celle dudit volume de passage (4), la forme et les dimensions du conduit (8, 32, 43) et du volume de passage (4) étant telles que ledit au moins un conduit (8, 32, 43) vienne en contact au moins partiellement sur toute la longueur de la surface intérieure de l'ondulation (3) ;
le volume de passage débouchant à l'extérieur par une ouverture (5) de largeur minimum inférieure à la largeur maximum du volume (4), de sorte que les susdites ondulations présentent un profil dans lequel s'engage par encliquetage ledit conduit ;
**caractérisé en ce que** la plaque est de type tôle ondulée en un matériau thermiquement conducteur et en ce quel l'échangeur comprenant en outre des moyens de fixation (11, 13, 14) de ladite plaque (2, 23, 26, 33-36) sur un support (10, 10') du côté de la face de la plaque (2, 23, 26, 33-36) opposé aux susdites ouvertures (5), par l'intermédiaire de moyens d'espacements (6) conçus de manière à ce qu'après fixation de la plaque (2, 23, 26, 33-36) sur le support (10, 10'), lesdites ondulations (3) s'étendent à une distance prédéterminée dudit support (10, 10').

2. Echangeur thermique selon la revendication 1,
**caractérisé en ce que** la plaque est constituée par une tôle dont l'épaisseur est inférieure à 1 millimètre.

3. Echangeur thermique selon l'une des revendications 1 ou 2,
**caractérisé en ce qu'**il comprend en outre un module de terminaison (27, 37-40) comportant une plaque (28) munie d'ondulations coudées (29) aptes à relier par paires les ondulations successives des plaques du premier type ces ondulations coudées étant conformées de façon à permettre au conduit (32, 43) de se dilater ou de se rétracter en fonction de la température du fluide caloporteur circulant dans le conduit sans engendrer de contraintes mécaniques capables de fragiliser ledit conduit (32, 43).

4. Echangeur thermique selon la revendication 3,
**caractérisé en ce que** les ondulations coudées présentent des dimensions suffisamment importantes pour permettre au conduit (32, 43) de se déplacer selon qu'il s'allonge ou se rétracte.

5. Echangeur thermique selon la revendication 1,
**caractérisé en ce qu'**au moins un parement (15, 20) est fixé sur l'échangeur.

6. Echangeur thermique selon la revendication 5,
**caractérisé en ce que** la fixation du parement (15, 20) sur l'échangeur fait intervenir des écorchés (22) réalisés sur la ou les plaques (23) ainsi qu'une colle qui, après avoir pénétré à travers les trous (21) desdits écorchés (22), s'étale sur la face arrière de la ou desdites plaques, et sèche, agit à la façon d'un ancrage.

7. Echangeur thermique selon la revendication 1,
**caractérisé en ce que** le support (10, 10') sur lequel est fixé l'échangeur est directement une paroi existante ou encore un rail (19) maintenu par des suspentes (17) à l'intérieur d'un plafond suspendu ou tout autre dispositif similaire.

8. Echangeur thermique selon la revendication 1,
**caractérisé en ce que** le conduit (8) présente un diamètre sensiblement égal à celui des ondulations (3).

9. Echangeur thermique selon la revendication 1,
**caractérisé en ce que** la surface intérieure de l'ondulation (3) en contact avec le conduit (8) représente trois quarts de la surface extérieure du conduit.

10. Echangeur thermique selon la revendication 1, **caractérisé en ce que** les moyens d'espacement sont des bossages estampés ou rapportés.

11. Echangeur thermique selon la revendication 1,
**caractérisé en ce que** les moyens d'espacement sont en forme de cône (6).

12. Echangeur thermique selon la revendication 1,
**caractérisé en ce que** lesdits moyens de fixation (13) de la plaque sur le support traversent également une entretoise isolante (14), l'espace défini entre le support et la plaque et dont la hauteur correspond à celle de ces entretoises étant occupé par un matériau isolant (12).

13. Echangeur thermique selon au moins l'une des revendications précédentes,
**caractérisé en ce que** la plaque et/ou le module comprennent des raidisseurs (7) formant des bossages estampés ou rapportés.

14. Echangeur thermique selon au moins l'une des revendications précédentes,
**caractérisé en ce que** les faces des plaques (2, 23, 26, 28, 33-36, 37-40) destinées à être du côté du volume à chauffer/refroidir sont planes, les différents éléments compris dans lesdites plaques (2, 23, 26, 28, 33-36, 37-40) tels que des ondulations (3, 29), des moyens d'espacement (6), des raidisseurs (7) faisant saillie du côté du support (10, 10').

15. Echangeur thermique selon au moins l'une des revendications précédentes,
**caractérisé en ce qu'**il est apte à recevoir des perçages (45, 46) et à être découpé sur site (47, 48) au moyen d'outils classiques pour s'adapter aux dimensions et/ou aux éléments des parois.

16. Echangeur thermique selon la revendication 1,
**Caractérisé en ce qu'**il comprend au moins deux plaques d'un troisième type comprenant chacune une série d'ondulations longitudinales parallèles débouchant au moins sur un bord transversal de la plaque et reliées par paires au voisinage de l'autre bord par des tronçons coudés, chaque paire définissant avec ledit tronçon un trajet sensiblement en forme de U à ailes allongées apte à recevoir le conduit, lesdites plaques étant disposées bord à bord au niveau de leurs bords latéraux opposés aux tronçons coudés, de manière à obtenir un trajet sinueux dans lequel passe ledit conduit.

17. Echangeurthermique selon la revendication 16,
**caractérisé en ce que** les ondulations rectilignes de l'une des plaques sont décalées par rapport aux ondulations de l'autre plaque, d'un intervalle entre deux ondulations successives.

18. Echangeur thermique selon la revendication 16 ou 17,
**caractérisé en ce qu'**il comprend deux séries de plaques mises bout à bout au niveau de leurs faces transversales situées à l'opposé des tronçons coudés, les plaques de chacune des séries étant disposées côte à côte au niveau de leurs bords longitudinaux.

19. Echangeur thermique selon la revendication 18,
**caractérisé en ce qu'**entre les deux séries de plaques S1 et S2 sont intercalées des plaques intercalaires.

20. Echangeur thermique selon l'une des revendications précédentes,
**caractérisé en ce que** les moyens de fixation comprennent des cuvettes réalisées dans le fond des ondulations, et des vis de fixation destinées à passer dans le fond desdites cuvettes pour venir se fixer dans le support.

21. Echangeur thermique selon la revendication 20,
**caractérisé en ce que** la profondeur des cuvettes est supérieure à la hauteur des têtes de vis.

22. Echangeur thermique selon la revendication 21,
**caractérisé en ce que** les moyens de fixation comprennent une gorge qui s'étend sur toute la longueur des ondulations.

23. Echangeur thermique selon l'une des revendications précédentes,
**caractérisé en ce qu'**il est utilisé en tant qu'écran phonique et anti-radiations.

## Patentansprüche

1. Wärmetauscher für Heiz-/Kühldecke zum Ausstatten von Mauern, Wänden und/oder Decken, umfassend:
- mindestens eine flexible Leitung (8, 32, 43) aus einem elastisch verformbaren Kunststoff, die für eine Verbindung mit einem Wärmeträgerfluidkreislauf bestimmt ist; und
- mindestens eine erste Platte (2, 23, 26, 33-36), die zum Sicherstellen eines Wärmeaustausches mit der Umgebungsluft dient und die eine Reihe von parallelen Sicken (3) eines ersten Typs aufweist, die sich zumindest über einen Teil der Länge der Platte (2, 23, 26, 33-36) erstrecken, wobei diese Sicken (3) jeweils einen Durchgangsraum (4) begrenzen, in welchem sich die Leitung erstreckt,
wobei die Leitung einen Querschnitt hat, der im Wesentlichen gleich jenem des Durchgangsraums (4) entspricht, wobei die Form und die Dimensionen der Leitung (8, 32, 43) und des Durchgangsraums (4) dergestalt sind, dass die mindestens eine Leitung (8, 32, 43) zumindest teilweise über die gesamte Länge der Innenfläche der Sicke (3) mit derselben in Kontakt gelangt;
wobei der Durchgangsraum durch eine Öffnung (5), deren minimale Breite kleiner ist als die maximale Breite des Raums (4), nach außen mündet, so dass die vorgenannten Sicken ein Profil aufweisen, in welchem die Leitung einrastet;
**dadurch gekennzeichnet, dass** die Platte vom Typ eines gewellten Blechs aus einem thermisch leitenden Material ist und dass
der Wärmetauscher ferner Befestigungsmittel (11, 13, 14) umfasst, zum Befestigen der Platte (2, 23, 26, 33-36) an einer Halterung (10, 10') auf der Seite der den vorstehenden Öffnungen (5) gegenüberliegenden Fläche der Platte (2, 23, 26, 33-36) mittels Abstandshaltern (6), die derart ausgebildet sind, dass sich die Sicken (3) nach der Befestigung der Platte (2, 23, 26 33-36) an der Halterung (10, 10') in einem vorgegebenen Abstand von der Halterung (10, 10') erstrecken.

2. Wärmetauscher nach Anspruch 1,
**dadurch gekennzeichnet, dass** die Platte durch ein Blech gebildet ist, dessen Dicke kleiner als 1 Millimeter ist.

3. Wärmetauscher nach einem der Ansprüche 1 oder 2,
**dadurch gekennzeichnet, dass** dieser des weiteren ein Abschlussmodul (27, 37-40) mit einer Platte (28) aufweist, die mit gebogenen Sicken (29) versehen ist, die geeignet sind zum paarweisen Verbinden der aufeinanderfolgenden Sicken der Platten vom ersten Typ, wobei diese gebogenen Sicken derart ausgebildet sind, dass sich die Leitung (32, 43) abhängig von der Temperatur des Wärmeträgerfluids in der Leitung ausdehnen und zusammenziehen kann, ohne mechanische Spannungen zu verursachen, die die Leitung (32, 43) gefährden können.

4. Wärmetauscher nach Anspruch 3,
**dadurch gekennzeichnet dass** die gebogenen Sicken Dimensionen aufweisen, die ausreichend groß sind, damit sich die Leitung (32, 43), je nachdem, ob diese sich ausdehnt oder zusammenzieht, bewegen kann.

5. Wärmetauscher nach Anspruch 1,
**dadurch gekennzeichnet, dass** an dem Wärmetauscher mindestens eine Verkleidung (15, 20) befestigt ist.

6. Wärmetauscher nach Anspruch 5,
**dadurch gekennzeichnet, dass** an der Befestigung der Verkleidung (15, 20) an dem Wärmetauscher Einschnitte (22) beteiligt sind, die an der oder den Platten (23) ausgebildet sind, sowie ein Klebstoff, der sich nach dem Durchdringen der Löcher (21) der Einschnitte (22) auf der Rückseite der Platte oder Platten verteilt und, wenn er trocken ist, wie eine Verankerung wirkt.

7. Wärmetauscher nach Anspruch 1,
**dadurch gekennzeichnet, dass** die Halterung (10, 10'), an welcher der Wärmetauscher befestigt ist, entweder direkt eine vorhandene Wand ist oder auch eine Schiene (19), die durch Aufhängungen (17) in einer abgehängten Decke gehalten wird, oder eine sonstige ähnliche Vorrichtung.

8. Wärmetauscher nach Anspruch 1,
**dadurch gekennzeichnet, dass** die Leitung (8) einen Durchmesser aufweist, der im Wesentlichen jenem der Sicken (3) entspricht.

9. Wärmetauscher nach Anspruch 1,
**dadurch gekennzeichnet, dass** die Innenfläche der Sicke (3), die sich mit der Leitung (8) in Kontakt befindet, drei Viertel der Außenfläche der Leitung beträgt.

10. Wärmetauscher nach Anspruch 1,
**dadurch gekennzeichnet, dass** die Abstandsmittel geprägte oder aufgesetzte Buckel sind.

11. Wärmetauscher nach Anspruch 1,
**dadurch gekennzeichnet, dass** die Abstandsmittel die Form eines Kegels (6) aufweisen.

12. Wärmetauscher nach Anspruch 1,
**dadurch gekennzeichnet, dass** die Befestigungsmittel (13) zum Befestigen der Platte an der Halterung auch einen Isoliersteg (14) durchgreifen, wobei der zwischen der Halterung und der Platte definierte Raum, dessen Höhe jener dieser Stege entspricht, von einem Isoliermaterial (12) belegt ist.

13. Wärmetauscher nach zumindest einem der vorhergehenden Ansprüche, **dadurch gekennzeichnet, dass** die Platte und/oder das Modul Versteifungen (7) aufweisen, die geprägte oder aufgesetzte Buckel bilden.

14. Wärmetauscher nach zumindest einem der vorhergehenden Ansprüche, **dadurch gekennzeichnet, dass** die Flächen der Platten (2, 23, 26, 28, 33-36, 37-40), die für die Seite des zu heizenden/kühlenden Raums bestimmt sind, ebene Flächen sind, wobei die in den Platten (2, 23, 26, 28, 33-36, 37-40) enthaltenen verschiedenen Elemente wie beispielsweise die Sicken (3, 29), die Abstandsmittel (6) und die Versteifungen (7) auf der Seite der Halterung (10, 10') vorspringen.

15. Wärmetauscher nach zumindest einem der vorhergehenden Ansprüche, **dadurch gekennzeichnet, dass** dieser geeignet ist für die Einbringung von Bohrungen (45, 46) und für den Zuschnitt vor Ort (47, 48) mittels üblicher Werkzeuge, um an die Dimensionen und/oder an die Wandelemente angepasst zu werden.

16. Wärmetauscher nach Anspruch 1,
**dadurch gekennzeichnet, dass** dieser mindestens zwei Platten eines dritten Typs umfasst, deren jede eine Reihe von parallelen Längssicken aufweist, die zumindest an einem Querrand der Platte münden und in der Nähe des anderen Rands durch gebogene Abschnitte paarweise verbunden sind, wobei jedes Paar mit dem genannten Abschnitt einen im Wesentlichen U-förmigen Verlauf definiert, mit Längsschenkeln, die für die Aufnahme der Leitung geeignet sind, wobei die Platten in Höhe ihrer den gebogenen Abschnitten gegenüberliegenden seitlichen Ränder auf Stoß angeordnet sind, derart, dass eine gewundene Bahn entsteht, in der die Leitung verläuft.

17. Wärmetauscher nach Anspruch 16,
**dadurch gekennzeichnet**, das die geraden Sicken einer der Platten gegenüber den Sicken der anderen Platte mit einem Abstand zwischen zwei aufeinanderfolgenden Sicken versetzt sind.

18. Wärmetauscher nach Anspruch 16 oder 17,
**dadurch gekennzeichnet, dass** dieser zwei Reihen von Platten umfasst, die in Höhe ihrer den gebogenen Abschnitten gegenüberliegenden Querseiten Ende an Ende angeordnet sind, wobei die Platten jeder Reihe in Höhe ihrer Längsränder Seite an Seite angeordnet sind.

19. Wärmetauscher nach Anspruch 18,
**dadurch gekennzeichnet, dass** zwischen die beiden Plattenreihen S1 und S2 Zwischenplatten geschaltet sind.

20. Wärmetauscher nach einem der vorhergehenden Ansprüche, **dadurch gekennzeichnet, dass** die Befestigungsmittel Mulden umfassen, die in dem Boden der Sicken gebildet sind, und Befestigungsschrauben, die zu ihrer Festlegung an der Halterung durch den Boden der Mulden hindurchgeführt sind.

21. Wärmetauscher nach Anspruch 20,
**dadurch gekennzeichnet, dass** die Tiefe der Mulden größer ist als die Höhe der Schraubenköpfe.

22. Wärmetauscher nach Anspruch 21,
**dadurch gekennzeichnet, dass** die Befestigungsmittel eine Nut umfassen, die sich über die gesamte Länge der Sicken erstreckt.

23. Wärmetauscher nach einem der vorhergehenden Ansprüche,
**dadurch gekennzeichnet, dass** dieser als Schalldämmung und Strahlenschutz verwendet wird.

## Claims

1. Heat exchanger for a heating/cooling wall, intended to be provided for walls, partitions and/or ceilings, comprising:
- at least one flexible duct (8, 32, 43) made of an elastically deformable plastic material, intended to be connected to a heat transfer fluid circuit; and,
- at least one first plate (2, 23, 26, 33-36) used to ensure a thermal exchange with the surrounding air, and comprising a series of parallel corrugations (3) of a first type that extends over at least one fraction of the length of the plate (2, 23, 26, 33-36), with each one of these corrugations (3) delimiting a passage volume (4) inside of which extends the duct;
said duct being of a section substantially equal to that of said passage volume (4), with the shape and the dimensions of the duct (8, 32, 43) and of the passage volume (4) being such that said at least one duct (8, 32, 43) comes into contact at least partially over the entire length of the inside surface of the corrugation (3);
with the passage volume opening to the outside by an opening (5) with a minimum width less than the maximum width of the volume (4), in such a way that the aforementioned corrugations have a profile wherein said duct is engaged by snap-fitting;
**characterised in that** the plate is of the corrugated sheet type made from a thermally conductive material and **in that** the exchanger further comprises means for fastening (11, 13, 14) said plate (2, 23, 26, 33-36) on a support (10, 10') on the side of the face of the plate (2, 23, 26, 33-36) opposite the aforementioned openings (5), by the intermediary of spacing means (6) designed in such a way that after fastening of the plate (2, 23, 26, 33-36) on the support (10, 10'), said corrugations (3) extend to a predetermined distance from said support (10, 10').

2. Heat exchanger according to claim 1,
**characterised in that** the plate is comprised of a sheet of which the thickness if less than 1 millimetre.

3. Heat exchanger according to one of claims 1 or 2, **characterised in that** it further comprises a termination module (27, 37-40) comprising a plate (28) provided with elbowed corrugations (29) able to connect by pairs the successive corrugations of the plates of the first type these elbowed corrugations being shaped in such a way as to allow the duct (32, 43) to expand or to retract according to the temperature of the heat transfer fluid circulating in the duct without generating mechanical stresses that can weaken said duct (32, 43).

4. Heat exchanger according to claim 3,
**characterised in that** the elbowed corrugations have dimensions that are sufficiently substantial to allow the duct (32, 43) to be moved according to whether it lengthens or retracts.

5. Heat exchanger according to claim 1,
**characterised in that** at least one cladding (15, 20) is fastened to the exchanger.

6. Heat exchanger according to claim 5,
**characterised in that** the fastening of the cladding (15, 20) on the exchanger makes use of nicks (22) carried out on the plate or plates (23) as well as an adhesive that, after having penetrated through the holes (21) of said nicks (22), spreads over the rear face of said plate or plates, and dries, acting as an anchoring.

7. Heat exchanger according to claim 1,
**characterised in that** the support (10, 10') on which is fastened the exchanger is directly an existing wall or a rail (19) maintained by hangers (17) inside a suspended ceiling or any other similar device.

8. Heat exchanger according to claim 1,
**characterised in that** the duct (8) has a diameter substantially equal to that of the corrugations (3).

9. Heat exchanger according to claim 1,
**characterised in that** the inside surface of the corrugation (3) in contact with the duct (8) represents three-quarters of the outside surface of the duct.

10. Heat exchanger according to claim 1, **characterised in that** the spacing means are stamped or added bosses.

11. Heat exchanger according to claim 1,
**characterised in that** the spacing means have the shape of a cone (6).

12. Heat exchanger according to claim 1,
**characterised in that** said means of fastening (13) the plate on the support also passes through an insulating spacer (14), with the space defined between the support and the plate and of which the height corresponds to that of these spacers being occupied by an insulating material (12).

13. Heat exchanger according to at least one of the preceding claims,
**characterised in that** the plate and/or the module include stiffeners (7) that form stamped or added bosses.

14. Heat exchanger according to at least one of the preceding claims,
**characterised in that** the faces of the plates (2, 23, 26, 28, 33-36, 37-40) intended to be on the side of the volume to be heated/cooled are flat, with the various elements included in said plates (2, 23, 26, 28, 33-36, 37-40) such as corrugations (3, 29), spacing means (6), stiffeners (7) protruding from the side of the support (10, 10').

15. Heat exchanger according to at least one of the preceding claims,
**characterised in that** it is able to receive drilled holes (45, 46) and to be cut on site (47, 48) using conventional tools in order to be adapted to the dimensions and/or to the elements of the walls.

16. Heat exchanger according to claim 1,
**characterised in that** it comprises at least two plates of a third type with each one comprising a series of parallel longitudinal corrugations opening at least onto a transverse edge of the plate and connected by pairs in the vicinity of the other edge by elbowed sections, with each pair defining with said section a substantially U-shaped path with extended wings able to receive the duct, with said plates being arranged edge to edge on their lateral edges opposite the elbowed sections, in such a way as to obtain a sinuous path in which said duct passes.

17. Heat exchanger according to claim 16,
**characterised in that** the straight corrugations of one of the plates are offset with respect to the corrugations of the other plate, by an interval between two successive corrugations.

18. Heat exchanger according to claim 16 or 17,
**characterised in that** it comprises two series of plates placed end to end on their transverse faces located opposite elbowed sections, with the plates of each one of the series being arranged side by side on their longitudinal edges.

19. Heat exchanger according to claim 18,
**characterised in that** between the two series of plates S1 and S2 insertion plates are inserted.

20. Heat exchanger according to one of the preceding claims,
**characterised in that** the means for fastening comprise basins made in the bottom of the corrugations, and fastening screws intended to pass through the bottom of said basins in order to be fastened in the support.

21. Heat exchanger according to claim 20,
**characterised in that** the depth of the basins is greater than the height of the screw heads.

22. Heat exchanger according to claim 21,
**characterised in that** the means for fastening comprise a groove that extends over the entire length of the corrugations.

23. Heat exchanger according to one of the preceding claims, **characterised in that** it is used as an acoustic and anti-radiation screen.
